# EUROPÄISCHE PATENTSCHRIFT

(11) **EP 2 879 852 B1**
(45) Veröffentlichungstag und Bekanntmachung des Hinweises auf die Patenterteilung: **04.03.2020**
(21) Anmeldenummer: 13741794.5
(22) Anmeldetag: 29.07.2013
(51) Int. Cl.: B29C 44/04, B29C 44/12, B29K 75/00

(54) **VERFAHREN ZUR VAKUUM-UNTERSTÜTZTEN HERSTELLUNG EINES PUR/PIR-SCHAUMKÖRPERS**
METHOD FOR THE VACUUM-SUPPORTED MANUFACTURE OF A PUR/PIR FOAM BODY
PROCÉDÉ DE FABRICATION SOUS VIDE D'UN CORPS DE MOUSSAGE PUR/PIR

(30) Priorität: 31.07.2012 EP 12178583
(43) Veröffentlichungstag der Anmeldung: 10.06.2015
(73) Patentinhaber: Covestro Deutschland AG, 51373 Leverkusen (DE)
(72) Erfinder: ALBERS, Reinhard, 51375 Leverkusen (DE); KLASEN, Patrick, 52391 Vettweiß (DE); VOGEL, Stephanie, 40764 Langenfeld (DE)
(74) Vertreter: Levpat
(86) Internationale Anmeldenummer: PCT/EP2013/065922
(87) Internationale Veröffentlichungsnummer: WO 2014/019992

(56) Entgegenhaltungen:
- DE-A1-102009 044 515
- US-A- 5 439 945
- US-A1- 2006 113 694
- US-A1- 2008 255 262
- US-A1- 2011 260 351
- US-A1- 2012 121 805
- US-B1- 6 627 018

## Beschreibung

Die vorliegende Erfindung betrifft ein Verfahren zur Herstellung eines PUR/PIR-Schaumkörpers, umfassend die Schritte des Bereitstellens einer Form, welche zum Anlegen eines Unterdrucks an das Innere der Form eingerichtet ist; des Einfüllens einer Reaktionsmischung umfassend eine Isocyanat-reaktive Zusammensetzung A und ein Isocyanat B in die Form und des Anlegens eines Unterdrucks an das Innere der Form, so dass der Unterdruck auf die eingefüllte Reaktionsmischung einwirkt.

In der Fernwärmeindustrie werden Polyurethansysteme zur Isolierung von Rohren eingesetzt. Diese Industrie leistet einen entscheidenden Beitrag im Bereich Nachhaltigkeit und Energieeinsparung und wird daher auf lange Sicht seinen wichtigen Stellenwert als Anwendung für PUR/PIR-Hartschaumstoffe behalten. Um dies zu gewährleisten, müssen jedoch die Netzwerke der Fernwärmeindustrie effizient und nachhaltig betrieben werden können. Berücksichtigt man nun, dass die Betriebstemperatur solcher Fernwärmenetzwerke bis zu 130 °C mit kurzfristigen Spitzenwerten von bis zu 145 °C betragen kann, wird deutlich, dass nur hochtemperaturstabile PUR/PIR-Hartschaumstoffe als effizientes und langfristiges Isolationsmaterial in Frage kommen.

Stand der Technik sind jedoch reine PUR-Hartschaumstoffe. Diese weisen typischerweise Erweichungstemperaturen von ca. 150 - 160 °C auf und scheiden somit als hochtemperaturstabile Schaumstoffe zur Langzeitbelastung aus. Die Fernwärmeindustrie hat dieses Problem bereits seit längerem erkannt und tendiert daher dazu, solche isolierten Rohre einzusetzen, die eine möglichst hohe berechnete Dauerbetriebstemperatur (CCOT) aufweisen. Auf 30 Jahre berechnet muss diese gemäß DIN EN 253 über 120 °C liegen. In Korrelation zu den höheren Erweichungstemperaturen von typischerweise > 180 °C kann diese Anforderung nur von mit PUR/PIR-Hartschaumstoffen isolierten Rohren erfüllt werden.

Bei der technischen Verarbeitung von PUR- im Vergleich zu PUR/PIR-Hartschaumstoffen kommt den Reaktionsgemischen zur PUR-Herstellung ein besseres Fließverhalten zugute. Dies ist für die Herstellung von Formschäumen, bei dem das stetig aushärtende Reaktionsgemisch lange Fließwege hinter sich bringen muss, ausschlaggebend. Da PIR-Reaktionsgemische deutlich schlechter fließen als entsprechende PUR-Reaktionsgemische, kamen sie bis heute nicht zum Einsatz in z.B. der diskontinuierlichen Produktion von Rohrisolierungen, bei der üblicherweise Fließwege von bis zu 12 m zurückgelegt werden müssen.

In der Rohrindustrie unterscheidet man zwischen kontinuierlichen und diskontinuierlichen Herstellverfahren zur Produktion von Rohren. Zu den üblichen kontinuierlichen zählen solche, bei denen das flüssige Reaktionsgemisch auf ein rotierendes Stahlrohr aufgesprüht oder an einem solchen axial geführten angegossen wird. Hierbei sind die Fließwege minimal, weshalb hier bereits PUR/PIR-Hartschaumstoffe zum Einsatz kommen. Ein Beispiel hierfür wird in WO 00/39497 A1 gegeben.

Bei den diskontinuierlichen Herstellungsmethoden von der Rohrindustrie wie Mittelanguss oder Gieß-Steig-Technik werden solche schlecht fließenden PUR/PIR-Systeme aufgrund der extrem langen Fließwege von bis zu 12 m jedoch noch nicht eingesetzt.

Neben Rohren können auch Hartschaumpaneele diskontinuierlich hergestellt werden. Hierbei unterscheidet man prinzipiell zwischen dem offenen und dem geschlossenen Eintrag. Bezüglich der Fließeigenschaften sind PUR/PIR-Reaktionsgemische daher eher für die offene Produktionsweise prädestiniert, da hier die Fließwege minimiert worden sind. Allerdings existieren Anwendungen im Markt, für die nur die geschlossene Injektionsmethode mit deutlich längeren Fließwegen in Frage kommt. Interessant für diese Anwendung sind PUR/PIR-Hartschaumstoffe vor allem deswegen, weil deren Brandeigenschaften deutlich besser sind als die von reinen PUR-Hartschaumstoffen.

Um das Fließverhalten von PUR/PIR-Systemen zu verbessern, wird üblicherweise der Index abgesenkt. Typischerweise spricht man von einem PUR/PIR-System bei einem Index von > 180. Kompatibel mit den zuvor beschriebenen diskontinuierlichen Produktionsverfahren sind jedoch nur Indizes im Bereich von 200 bis deutlich unter 300. Dies wiederum führt zu einem deutlich geringeren PIR-Anteil und damit auch zu niedrigeren Erweichungstemperaturen, einem schlechteren Brandverhalten und insgesamt einer schlechteren Temperaturbeständigkeit.

US 6 627 018 B1 offenbart ein anderes Verfahren zur Vakuum-unterstützten Herstellung einer PUR/PIR-Schaumkörpers.

Um nun erfolgreich hochtemperaturstabile PUR-/PIR-Hartschaumstoffe mit sehr guten Brandeigenschaften diskontinuierlich verarbeiten zu können, fehlen aktuell technische Lösungen. Die vorliegende Erfindung hat sich daher die Aufgabe gestellt, ein solches Verfahren bereitzustellen. Diese Aufgabe wurde erfindungsgemäß gelöst durch ein Verfahren zur Herstellung eines PUR/PIR-Schaumkörpers, umfassend die Schritte:
- Bereitstellen einer Form, welche zum Anlegen eines Unterdrucks an das Innere der Form eingerichtet ist;
- Einfüllen einer Reaktionsmischung umfassend eine Isocyanat-reaktive Zusammensetzung **A** und ein Isocyanat **B** in die Form;
- Anlegen eines Unterdrucks an das Innere der Form, so dass der Unterdruck auf die eingefüllte Reaktionsmischung einwirkt;
   wobei im Verfahren folgende aufeinanderfolgende Zeitpunkte definiert werden:
   t0: Beginn des Einfüllens der Reaktionsmischung in die Form
   tL: Beginn des Aufschäumens der Reaktionsmischung in der Form
   tA: Beginn des Abbindens der Reaktionsmischung in der Form
   tF: Abschluss des Füllens der Form durch die aufgeschäumte Reaktionsmischung
   wobei vor dem Anlegen des Unterdrucks abgewartet wird, bis das Reaktionsgemisch eine gewisse Viskosität aufweist, so dass Treibmittelblasen nicht aus der Reaktionsmischung durch den Unterdruck herausgerissen werden, der Unterduck spätestens nach tA an das Innere der Form angelegt wird und die Kennzahl der Reaktionsmischung ≥ 300 beträgt.

Überraschenderweise wurde nun gefunden, dass sich die Fließeigenschaften solcher Reaktionsgemische mit einem Index von ≥ 300 durch das Anlegen von Unterdruck deutlich verbessern lassen. Die Voraussetzung hierfür ist, dass der Zeitpunkt und Zeitraum, währenddessen der Unterdruck angelegt wird, auf eine bestimmte Weise ausgewählt wird.

Das erfindungsgemäße Verfahren ist ein diskontinuierliches Verfahren, in dem ein Unterdruck auf eine Polyurethan/Polyisocyanurat-Reaktionsmischung (PUR/PIR-Reaktionsmischung) einwirkt. Dieses geschieht in einer evakuierbaren Form. Die Form kann eine Schaumform in dem Sinne sein, dass die Reaktionsmischung in die Schaumform als solche eingebracht wird und nach dem Entformen ein der Schaumform entsprechender Schaumkörper erhalten wird (Schaumform mit evakuierbarer Kavität). Es ist aber ebenfalls möglich, dass die Form eine Evakuierungskabine darstellt, so dass beispielsweise die eigentliche Schaumform in diese Kabine eingebracht wird, mit der Reaktionsmischung befüllt wird, die Form geschlossen wird und dann der Unterdruck angelegt werden kann.

Unter "Unterdruck" wird im Rahmen der vorliegenden Erfindung ein Druck von weniger als 1013 mbar verstanden.

Vor, während und nach dem Aufschäumen der PUR/PIR-Reaktionsmischung lassen sich generell die nachfolgenden Zeitpunkte definieren. Sie lassen sich durch Beobachtung eines Freischaums (im einfachsten Fall erhältlich durch Einfüllen der Reaktionsmischung in einen Papiersack) mit der entsprechenden Reaktionsmischung erhalten.

t0: Beginn des Einfüllens der Reaktionsmischung in die Form.

tL (Liegezeit): Beginn des Aufschäumens der Reaktionsmischung.

tA (Abbindezeit): Beginn des Abbindens der Reaktionsmischung. Die Abbindezeit zeigt den Übergang des Reaktionsgemischs vom flüssigen in den festen Zustand an. Bei Erreichen dieses Zeitpunkts kann mit einem Reaktionsumsatz von ca. 50 % gerechnet werden. Die Abbindezeit wird manuell gemessen, indem zum Beispiel ein Holzstab wiederholt in das schon weit aufgetriebene Reaktionsgemisch getaucht und wieder herausgezogen wird und festgestellt wird, wann der Stab Fäden nach sich zieht. Die Zeitmessung beginnt mit dem Mischen der Reaktionsmischung.

tF (Formfüllzeit): Abschluss des Füllens der Form durch die aufgeschäumte Reaktionsmischung.

Somit lassen sich auch die folgenden Zeiträume definieren:

| | | |
|---|---|---|
| 1) | t0 - tL | Zeit nach dem Eintrag des Reaktionsgemisches bis zum beginnenden Aufschäumen |
| 2) | tL - tA | Zeit nach Beginn des Aufschäumens bis zum beginnenden Abbinden |
| 3) | tA - tF | Zeit zwischen dem Abbinden des Schaumes und dem vollständigen Füllen der Form |

Durch das Anlegen eines Unterdrucks zum richtigen Zeitpunkt wird erreicht, dass (geschlossene) Formen gleichmäßig mit dem PUR/PIR-Reaktionsgemisch vor dessen chemischem Abbinden ausgefüllt werden. Überwälzungen oder gar Unterfüllen der Form werden vermieden, ohne dass die chemische Zusammensetzung des PUR/PIR-Hartschaums geändert werden muss. Vor dem Anlegen des Unterdrucks wird abgewartet, bis das Reaktionsgemisch eine gewisse Viskosität aufweist, so dass Treibmittelblasen nicht aus der Matrix durch den Unterdruck herausgerissen werden.

Es lassen sich somit die sehr guten Brand- und Temperaturbeständigkeiten von PUR/PIR-Hartschäumen auch auf Anwendungen übertragen, die über diskontinuierliche Produktionstechnologien hergestellt werden.

Die Kennzahl (der Index) des Reaktionsgemisches ist definiert als das molare Verhältnis von NCO-Gruppen zu NCO-reaktiven Gruppen, multipliziert mit 100. Vorzugsweise beträgt die Kennzahl ≥ 320, mehr bevorzugt ≥ 340.

Zur Herstellung der Urethan- und Isocyanuratgruppen aufweisenden Schaumstoffe können insbesondere als Ausgangskomponenten verwendet werden:
- Verbindungen mit mindestens zwei gegenüber Isocyanaten reaktiven Wasserstoffatomen mit einem Molekulargewicht im Bereich von 400 g/mol bis 10000 g/mol, zum Beispiel Aminogruppen, Thiolgruppen, Hydroxylgruppen oder Carboxylgruppen aufweisende Verbindungen.
- Aliphatische, cycloaliphatische, araliphatische, aromatische und heterocyclische Polyisocyanate, bevorzugt Diphenylmethandiisocyanat (MDI) oder Polyphenylpolymethylenpolyisocyanate (polymeres MDI), Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat.

Die Herstellung der Schaumstoffe kann unter Verwendung von üblichen Hilfs- und Zusatzstoffen wie Katalysatoren, Treibmitteln, Vernetzern, Flammschutzmitteln, Schaumstabilisatoren, Fliessverbesserern und/oder Inhibitoren erfolgen. Bevorzugte Treibmittel in **A** sind fluorierte Kohlenwasserstoffe (HFC), fluorierte Olefine (HFO), Kohlenwasserstoffe und deren Gemische untereinander.

Vorzugsweise umfasst die Isocyanat-reaktive Zusammensetzung:
(i) ein aromatisches Polyesterpolyol **A1** mit einer Hydroxylzahl von ≥ 100 mg KOH/g bis ≤ 350 mg KOH/g, einer durchschnittlichen OH-Funktionalität von ≥ 1,8 bis ≤ 6,5,
(ii) ein aliphatisches Polyetherpolyol **A2a** mit einer Hydroxylzahl von ≥ 150 mg KOH/g bis ≤ 500 mg KOH/g, einer durchschnittlichen OH-Funktionalität von ≥ 1,5 bis ≤ 5,5 und
   ein weiteres aliphatisches Polyetherpolyol **A2b** mit einer Hydroxylzahl von ≥15 mg KOH/g bis ≤ 150 mg KOH/g, einer durchschnittlichen OH-Funktionalität von ≥ 1,5 bis ≤ 5,5 und einem Ethylenoxid-Gehalt von ≥ 0 Massen-% bis ≤ 50 Massen-%, bezogen auf die Gesamtmasse von **A2b**,
(iii) eine Treibmittelkomponente **A3** und
(iv) eine Katalysatorkomponente **A4** umfassend einen Katalysator **A4a** zur Katalyse der Polyurethanbildung und einen Katalysator **A4b** zur Katalyse der Polyisocyanuratbildung.

Nachfolgend wird zunächst auf die eingesetzten Polyole näher eingegangen. Alle genannten Hydroxylzahlen lassen sich gemäß DIN 53240 bestimmen.

Beispiele für aromatische Polyesterpolyole **A1a** sind Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(l,3), Butandiol(l,4), Hexandiol(l,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Bevorzugt werden Ethylenglykol und Diethylenglykol eingesetzt.

Als Polycarbonsäuren können beispielsweise Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure oder eingesetzt werden. Bevorzugt werden Adipinsäure und Phthalsäureanhydrid eingesetzt.

Sofern die mittlere Funktionalität des zu veresternden Polyols ≥ 2 ist, können zusätzlich auch Monocarbonsäuren wie Benzoesäure und Hexancarbonsäure mit verwendet werden.

Es ist bevorzugt, dass das aromatische Polyesterpolyol **A1a** eine Hydroxylzahl von ≥ 150 mg KOH/g bis ≤ 340 mg KOH/g (mehr bevorzugt ≥ 200 mg KOH/g bis ≤ 340 mg KOH/g) und eine durchschnittliche OH-Funktionalität von ≥ 1,8 bis ≤ 3,0 aufweist. Die Säurezahl liegt vorzugsweise in einem Bereich von ≥ 0,1 mg KOH/g bis ≤ 5,0 mg KOH/g.

Verwendbare aliphatische Polyetherpolyole **A2a** sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Es ist bevorzugt, dass das aliphatische Polyetherpolyol **A2a** eine Hydroxylzahl von ≥ 200 mg KOH/g bis ≤ 500 mg KOH/g (mehr bevorzugt ≥ 220 mg KOH/g bis ≤ 450 mg KOH/g) und durchschnittliche OH-Funktionalität von ≥ 1,8 bis ≤ 3,5 aufweist.

Durch die ausgewählten Hydroxylzahlen lässt sich das aliphatische Polyetherpolyol **A2a** als vergleichsweise kurzkettiges Polyol charakterisieren.

Ein bevorzugtes aliphatisches Polyetherpolyol **A2a** wird ferner aus der Umsetzung eines oder mehrerer zuckerhaltiger Startermoleküle mit Propylenoxid erhalten.

Für das aliphatische Polyetherpolyol **A2b** lassen sich grundsätzlich dieselben Ausgangsmaterialien wie für das Polyetherpolyol **A2a** einsetzen. Es ist bevorzugt, dass dieses Polyetherpolyol **A2b** eine Hydroxylzahl von ≥ 20 mg KOH/g bis ≤ 120 mg KOH/g (mehr bevorzugt 25 mg KOH/g bis ≤ 145 mg KOH/g) und durchschnittliche OH-Funktionalität von ≥ 1,8 bis ≤ 3,5 aufweist. Weiterhin liegt der Ethylenoxidgehalt dieses Polyols vorzugsweise bei ≥ 0 Massen-% bis ≤ 40, bezogen auf die Gesamtmasse von **A2b.**

Durch die ausgewählten Hydroxylzahlen lässt sich das aliphatische Polyetherpolyol **A2b** als vergleichsweise langkettiges Polyol charakterisieren.

Ein bevorzugtes weiteres aliphatisches Polyetherpolyol **A2b** wird aus der zweistufigen Umsetzung eines oder mehrerer zuckerhaltiger und/oder Glykol-Startermoleküle mit Ethylenoxid und Propylenoxid erhalten.

Beispiele für eine geeignete Isocyanatkomponente **B** sind 1,4-Butylendiisocyanat, 1,5-Pentandiisocyanat, 1,6-Hexamethylendiisocyanat (HDI), Isophorondiisocyanat (IPDI), 2,2,4-und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Die Treibmittelkomponente **A3** umfasst beispielsweise chemische Treibmittel wie Wasser und/oder physikalische Treibmittel wie Kohlenwasserstoff-Treibmittel (insbesondere n-Pentan, i-Pentan und Cyclopentan und deren Gemische), halogenierte Kohlenwasserstoff-Treibmittel und halogenierte Olefine.

Hinsichtlich der Katalysatorkomponente **A4** sind Beispiele für den Polyurethankatalysator A4a aminische Katalysatoren, insbesondere ausgewählt aus der Gruppe Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin und/oder Dimethylethanolamin.

Beispiele für den Polyisocyanuratkatalysator **A4b** sind Zinnverbindungen wie Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und/oder Dioctylzinndiacetat, weiterhin Stichstoffheterozyklen wie Tris-(N,N-dimethylaminopropyl)-s-hexahydrotriazin, Hydroxide wie Tetramethylammoniumhydroxid und/oder Natriumhydroxid oder Carbonsäuresalze eines Alkalimetalls wie Natrium-N-[(2-hydroxy-5-nonylphenyl)methyl]-N-methylaminoacetat, Natriumacetat, Natriumoctoat, Kaliumacetat und/oder Kaliumoctoat oder Gemische der vorgenannten Katalysatoren.

Die Isocyanat-reaktive Zusammensetzung **A** kann weiterhin Hilfs- und Zusatzstoffe umfassen, beispielsweise:
(v) wenigstens einen Schaumstabilisator, bevorzugt ein Polyethersiloxan, welches im Allgemeinen als ein Copolymerisat aus Ethylen- und/oder Propylenoxid aufgebaut und mit einem Polydimethylsiloxanrest verbunden ist, und
(vi) wenigstens ein Flammschutzmittel, bevorzugt bromierte und/oder chlorierte Polyole oder Phosphorverbindungen (derartige Flammschutzmittel sind zum Beispiel im "Kunststoffhandbuch", Band 7 "Polyurethane", Kapitel 6.1 beschrieben; zum Beispiel die Ester der Orthophosphorsäure und der Metaphosphorsäure, die ebenfalls Halogene enthalten können; bevorzugt werden bei Raumtemperatur flüssige Flammschutzmittel eingesetzt).

Die Erfindung wird anhand der nachfolgenden Ausführungsformen näher beschrieben. Sie können beliebig miteinander kombiniert werden, solange sich aus dem Kontext nicht eindeutig das Gegenteil ergibt. Weiter Ausführungsformen sind durch die Angabe dieser nicht ausgeschlossen, die Angabe der erfindungsgemäßen Ausführungsformen ist hiermit nicht abgeschlossen.

In einer Ausführungsform umfasst die Katalysatorkomponente ein tertiäres Amin und ein Carbonsäuresalz eines Alkalimetalls. Vorzugsweise handelt es sich hierbei um N,N-Dimethylbenzylamin und Kaliumacetat.

In einer weiteren Ausführungsform liegt das Massenverhältnis von **A1** : (**A2a** + **A2b)** zwischen ≥ 1 : 1 und ≤ 6 : 1 und der Massenanteil der Summe aus **A1** und (**A2a** + **A2b)** liegt zwischen ≥ 65 Massen-% und ≤ 85 Massen-%, bezogen auf die Gesamtmasse von **A.** Bevorzugt ist ein Massenverhältnis von ≥ 1,5 : 1 bis ≤ 4 : 1 zwischen **A1** : **(A2a** + **A2b)**.

In einer weiteren Ausführungsform liegt das Massenverhältnis von **A2a** : **A2b** zwischen ≥ 0,3 : 1 und ≤ 3 : 1. Bevorzugt ist ein Massenverhältnis von ≥ 0,5 : 1 bis ≤ 2 : 1.

In einer weiteren Ausführungsform umfasst die Isocyanatkomponente **B** wenigstens ein Isocyanat, das ausgewählt ist aus der Gruppe:
2,2' -Methylendiphenyldiisocyanat, 2,4'-Methylendiphenyldiisocyanat, 4,4'-Methylendiphenyldiisocyanat, polynukleares Methylendiphenyldiisocyanat, 2,4-Toluylendiisocyanat, 2,6-Toluylendiisocyanat, Diisocyanatobenzol und/oder Naphthyldiisocyanat;
und/oder die Isocyanatkomponente **B** umfasst:
wenigstens ein NCO-terminiertes Präpolymer, erhältlich durch Reaktion wenigstens eines der vorstehend genannten Isocyanate mit wenigstens einem Polyol.

Unter den Isocyanaten ist polynukleares (polymeres) MDI bevorzugt. Hinsichtlich der Präpolymere sind die Polyole bevorzugt ausgewählt aus aliphatischen oder aromatischen Polyetherpolyolen mit jeweils 1 bis 6 Hydroxylgruppen oder aliphatischen oder aromatischen Polyesterpolyolen mit jeweils einer zahlengemittelten Molekülmasse zwischen ≥ 60 g/mol und ≤ 1000 g/mol.

In einer weiteren Ausführungsform des erfindungsgemäßen Verfahrens wird der Unterdruck bereits vor tA angelegt und ≥ 50% bis ≤ 80% der Gesamtdauer des Anlegens des Unterdrucks liegen vor tA. Dadurch, dass bereits entsprechend vor dem Abbinden der Unterdruck angelegt wird, kann das Aufsteigen eines viskosen Reaktionsgemisches in einer Form weiter unterstützt werden. Vorzugsweise liegen ≥ 55% bis ≤ 70% der Gesamtdauer des Anlegens des Unterdrucks vor tA. Somit liegen ≥ 20% bis ≤ 50%, bevorzugt ≥ 30% bis ≤ 45% der Gesamtdauer des Anlegens des Unterdrucks nach tA.

In einer weiteren Ausführungsform des erfindungsgemäßen Verfahrens wird das Anlegen des Unterdrucks vor tF beendet. Auf diese Weise kann die schäumende Reaktionsmischung auch schwer zugängliche Stellen erreichen. Vorzugsweise wird das Anlegen des Unterdrucks ≥ 1 Sekunde bis ≤ 10 Sekunden, mehr bevorzugt ≥ 2 Sekunde bis ≤ 5 Sekunden beendet und das Innere der Form auf Umgebungsdruck gebracht.

In einer weiteren Ausführungsform des erfindungsgemäßen Verfahrens wird das Anlegen des Unterdrucks zum Zeitpunkt von tF oder nach tF beendet.

In einer weiteren Ausführungsform des erfindungsgemäßen Verfahrens beträgt die Kennzahl der Reaktionsmischung ≥ 300 bis ≤ 500. Vorzugsweise beträgt die Kennzahl ≥ 320 bis ≤ 450, mehr bevorzugt ≥ 340 bis ≤ 400.

In einer weiteren Ausführungsform des erfindungsgemäßen Verfahrens wird der Unterdruck für eine Gesamtdauer von ≥ 5 Sekunden bis ≤ 180 Sekunden angelegt. Vorzugsweise beträgt diese Dauer ≥ 10 Sekunden bis ≤ 150 Sekunden, mehr bevorzugt ≥ 15 Sekunden bis ≤ 120 Sekunden.

In einer weiteren Ausführungsform des erfindungsgemäßen Verfahrens beträgt der Unterdruck ≥ 0.01 bar bis ≤ 0.95 bar. Hierunter ist der absolute Unterdruck in der Form zu verstehen (d. h. keine Differenz zu einem Umgebungsdruck). Vorzugsweise beträgt der Unterdruck ≥ 0.1 bar bis ≤ 0.85 bar, mehr bevorzugt ≥ 0.5 bar bis ≤ 0.95 bar.

In einer weiteren Ausführungsform des erfindungsgemäßen Verfahrens ist die Höhe des angelegten Unterdrucks zeitlich veränderlich. Der Unterdruck kann Abhängigkeit von der Zeit steigend und/oder fallen. So kann beispielsweise der Unterdruck von einem Ausgangswert zu einem Endwert fallen. Es ist beispielsweise auch möglich, dass der Unterdruck auf einem bestimmten Plateauwert verbleibt, bevor er weiter auf einen Endwert abgesenkt wird. Es ist weiterhin möglich, dass der Unterdruck zwischenzeitlich oder gegen Ende des Anlegens des Unterdrucks wieder sinkt (d. h. der absolute Druck in der Form steigt wieder).

Durch die zeitliche Variabilität des in der Form herrschenden Unterdrucks kann noch genauer Einfluss auf die Schaumentwicklung genommen werden.

In einer weiteren Ausführungsform des erfindungsgemäßen Verfahrens wird das Einfüllen der Reaktionsmischung in die Form derart durchgeführt, dass die Reaktionsmischung mindestens einen in der Form befindlichen und von der Form verschiedenen Gegenstand kontaktiert. Hier liegt folglich der Fall vor, dass die Form die Aufgabe einer Evakuierungskammer übernimmt: der Gegenstand wird beispielsweise in die Form eingelegt, mit der Reaktionsmischung kontaktiert (befüllt), die Form wird geschlossen und der Unterdruck wird dann an das Innere der Form angelegt.

Vorzugsweise ist der Gegenstand ein Hohlkörper und die Reaktionsmischung liegt im Inneren des Hohlkörpers vor.

Es ist ebenfalls bevorzugt, dass die Reaktionsmischung zwischen zwei Deckschichten vorliegt. Auf diese Weise können diskontinuierliche Isolationspaneele erhalten werden. Die Deckschichten können mittels Abstandshalterungen oder durch geeignete Aufnalunen in der Form voneinander beabstandet bereitgestellt werden und die Reaktionsmischung wird dann zwischen die Deckschichten eingebracht, die Form wird geschlossen und der Unterdruck wird angelegt. Geeignete Materialien für Deckschichten sind beispielsweise Kunststoffe, Stahl- und Aluminiumschichten.

Weiterhin bevorzugt ist, dass die Reaktionsmischung auf der Außenseite einer Rohrleitung vorliegt. Solche Rohrleitungen können beispielsweise als Fernwärmeleitungen Verwendung finden. In diesem Zusammenhang noch mehr bevorzugt ist, dass die Reaktionsmischung zwischen der Außenseite einer ersten Rohrleitung und der Innenseite einer zweiten Rohrleitung vorliegt, wobei die erste Rohrleitung innerhalb der zweiten Rohrleitung angeordnet ist.

In einer weiteren Ausführungsform des erfindungsgemäßen Verfahrens beträgt der Fließindex der Reaktionsmischung nach dem Anlegen des Unterdrucks ≥ 1.0 bis ≤ 1.3. Der Fließindex ist hierbei definiert als hE/hG, wobei hE die erreichte Endhöhe des Schaums und hG die Höhe des Schaums zum Gelpunkt tG in einem Vakuum-Hartschaumsteigrohr sind. Der Gelpunkt tG kann hierbei mit dem Zeitpunkt des Beginns des Abbindens (s. oben) gleichgesetzt werden. Ein bevorzugter Bereich für den Fließindex ist ≥ 1.0 bis ≤ 1.2.

Die vorliegende Erfindung betrifft ebenfalls einen PUR/PIR-Schaumkörper, erhalten durch ein erfindungsgemäßes Verfahren. In einer weiteren Ausführungsform ist der PUR/PIR-Schaumkörper ein Isolationspaneel oder eine isolierte Rohrleitung.

### Beispiele:

Die vorliegende Erfindung wird anhand der nachfolgenden Beispiele noch eingehender erläutert werden.

Die Herstellung der PUR/PIR-Hartschaumstoffe erfolgte nach dem bekannten Einstufenverfahren, bei dem die Reaktionskomponenten kontinuierlich oder diskontinuierlich miteinander zur Reaktion gebracht werden und dann in bzw. auf geeignete Formen/Substrate zur Aushärtung gebracht werden. Beispiele sind in USA-A 2 761 565, in G. Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Im Falle der vorliegenden Erfindung wurde die 2-Komponenten-Rezeptur mit einer Polyolformulierung A, einem physikalischen Treibmittel T und einem Isocyanat B über die konventionelle Vermischung dieser Komponenten über ein Rührwerk im Labormaßstab verarbeitet. Des Weiteren wurden Versuche auf einer konventionellen Hochdruckmaschine zur Verarbeitung von Polyurethan durchgeführt.

### Glossar:

| | |
|---|---|
| Polyol 1: | Polyesterpolyol mit einer Hydroxylzahl von 240 mg KOH/g, einer theoretischen |
| Funktionalität von 2.0 und einer Viskosität von 15600 mPas bei 25 °C (BMS AG) | |
| Polyol 2: | Polyetherpolyol mit einer Hydroxylzahl von 440 mg KOH/g, einer theoretischen |
| Funktionalität von 2.8 und einer Viskosität von 440 mPas bei 25 °C (BMS AG) | |
| Polyol 3: | Polyetherpolyol mit einer Hydroxylzahl von 28 mg KOH/g, einer theoretischen |
| Funktionalität von 2.0 und einer Viskosität von 860 mPas bei 25 °C (BMS AG) | |
| TEP: | Triethylphosphat |
| Tegostab B 8461: | Schaumstabilisator (Evonik) |
| Desmorapid 1792: | Katalysator (BMS AG) |
| Desmorapid DB: | Katalysator (BMS AG) |
| Cyclopentan: | physikalisches Treibmittel (Exxon Mobil) |
| Isocyanat: | polymeres MDI (Desmodur 44V20L, BMS AG) |

### Beispielgruppe 1: Herstellung der PUR/PIR-Schaumstoffe im Labor

Die Polyolformulierung A wurde mit dem Treibmittel T und dem Isocyanat B im Labor manuell über ein gängiges Rührwerkzeug bei 1000 U/min in einem Reaktionsgefäß (Pappbecher) vermischt und zur Reaktion gebracht. Die Rohstofftemperaturen lagen jeweils bei 23 °C.

### a) Freischäume

Zur Herstellung von Freischäumen wurde das Reaktionsgemisch in eine Papierform gegossen. Hierin konnte der Schaum frei aufschäumen. Die Form brachte keinerlei Gegendruck auf, sodass der Schaum nur gegen den Luftdruck aufsteigen musste. Die so hergestellten Freischäume wurden hinsichtlich ihrer Rohdichte im Kern und ihrer Brandeigenschaften analysiert.

### b) Formschäume

Zur Herstellung von Formschäumen wurden 991 g des Reaktionsgemisches zum Einstellen einer Dichte von 60 kg/m³ in eine Form mit dem Volumen 16,5 L eingegossen und die Form anschließend verschlossen. Die Formtemperatur betrug 55 °C. Die so hergestellten Formschäume wurden hinsichtlich ihrer Rohdichte im Kern, ihrer mechanischen Eigenschaften in Abhängigkeit von der Temperatur und ihrer Brandeigenschaften analysiert.

### c) Fließeigenschaften des Schaumes bei Normaldruck

Zur Untersuchung der Fließeigenschaften der Schäume wurde das Reaktionsgefäß nach dem Rührvorgang mit einer für diese Methode normierten Menge des Reaktionsgemisches (265 g) in ein beheizbares Steigrohr (HSR, Hartschaumsteigrohr) mit der Höhe von 150 cm und dem Innendurchmesser von 9.1 cm eingebracht. Die Temperatur des Steigrohrs lag bei 35 °C. Die Steighöhe und der Druck wurden in Abhängigkeit der Zeit detektiert und gemäß des jeweils vorherrschenden Luftdrucks auf einen Standarddruck von 1013 mbar korrigiert. Hierbei sind folgende Größen zu unterscheiden: tG (Gelpunkt, in s), hG (Höhe zum Zeitpunkt tG, in cm), hE (erreichte Endhöhe des Schaums, in cm), Fließindex (Quotient aus hE und hG).

### d) Fließeigenschaften des Schaumes bei Unterdruck

Zur Untersuchung der Fließeigenschaften der Schäume bei angelegtem Unterdruck wurde das Reaktionsgefäß nach dem Rührvorgang mit einer für diese Methode normierten Menge des Reaktionsgemisches (265 g) in ein beheizbares Steigrohr (V-HSR, Vakuum-Hartschaumsteigrohr) mit der Höhe von 150 cm und dem Innendurchmesser von 9.1 cm eingebracht. Die Temperatur des Steigrohrs lag bei 35 °C. Der angelegte Unterdruck betrug 40 mbar. Die Steighöhe und der Druck wurden in Abhängigkeit der Zeit detektiert. Es sind folgende Größen zu unterscheiden: tG (Gelpunkt, in s), hG (Höhe zum Zeitpunkt tG, in cm), hE (erreichte Endhöhe des Schaums, in cm), Fließindex (Quotient aus hE und hG).

Die Ergebnisse der Laborversuche sind in der nachfolgenden Tabelle 1 aufgeführt. Beispiel Nr. V1 ist ein Vergleichsbeispiel.

**Tabelle 1**

| **Beispiel Nr.** | | **V1** | **2** |
|---|---|---|---|
| Polyol 1 | Gew.-Tle. | 57,0 | 57,0 |
| Polyol 2 | Gew.-Tle. | 13,0 | 13,0 |
| Polyol 3 | Gew.-Tle. | 13,0 | 13,0 |
| TEP | Gew.-Tle. | 15,0 | 15,0 |
| Wasser | Gew.-Tle. | 1,6 | 1,6 |
| B8461 | Gew.-Tle. | 2,0 | 2,0 |
| Desmorapid 1792 | Gew.-Tle. | 1,4 | 2,1 |
| Desmorapid DB | Gew.-Tle. | 0,5 | 0,8 |
| Gesamtmenge | Gew.-Tle. | 100 | 100 |
| Cyclopentan | Gew.-Tle. | 6,2 | 12,7 |
| Isocyanat 44V20 | Gew.-Tle. | 148 | 259 |
| Kennzahl | | 200 | 350 |

| ***Freischaum*** | | | |
|---|---|---|---|
| Rohstofftemperatur | °C | 23 | 23 |
| Rührereinstellung | U/min | 1000 | 1000 |
| Rührzeit, t_{R} | S | 15 | 15 |
| Liegezeit, t_{L} | S | 40 | 35 |
| Abbindezeit, t_{A} | S | 108 | 100 |
| freie Rohdichte | kg/m³ | 40,2 | 40,2 |
| Flammhöhe | Mm | 144 | 128 |

| ***Formschaum*** | | | |
|---|---|---|---|
| eingefüllte Rohdichte | kg/m³ | 60 | 60 |
| Flammhöhe*^{a}* | Mm | 135 | 116 |
| Erweichungspunkt*^{b}* | °C | 208 | 234 |

| ***HSR*** | | | |
|---|---|---|---|
| tG | S | 98 | 108 |
| Fließindex | hE/hG | 1,19 | 1,33 |

| ***V-HSR*** | | | |
|---|---|---|---|
| tG | S | 102 | 109 |
| Fließindex | hE/hG | 1,11 | 1,13 |

| | | | |
|---|---|---|---|
| *^{a}*Kleinbrennertest nach DIN EN ISO 11925-2; *^{b}*gemäß Torsionsmessung nach DIN EN ISO 6721-2. | | | |

Die Rezeptur des Vergleichsbeispiels V1 unterscheidet sich von der aus Beispiel 2 nur im Index. Die Katalyse und die Treibmittelmenge wurden wegen der erhöhten Menge des Isocyanats angepasst. Es ergeben sich in beiden Beispielen vergleichbare freie Rohdichten und Reaktivitätsprofile, was anhand der Liegezeiten und Abbindezeiten zu erkennen ist. Grundsätzlich verschieden sind jedoch beispielsweise die Brandeigenschaften, so weist V1 im Freischaum mit dem geringeren Index eine Flammhöhe von 144 mm auf, wohingegen die Flammhöhe im Freischaum von Beispiel 2 mit dem höheren Index bereits nur 128 mm beträgt. Dieser Trend wird auch in den Formschäumen deutlich, wo fast 20 mm Unterschied in der Flammhöhe zwischen den Schäumen mit Index 200 und Index 350 gemessen wurden. Daraus wird deutlich, welchen Vorteil ein höhere Index in Bezug auf die Brandeigenschaften von PUR-/PIR-Hartschaumstoffen hat. Mit Blick auf die verschieden hohen Erweichungspunkte wird auch schnell der Vorteil eines höheren Indexes klar. Der Erweichungspunkt liegt nämlich im Fall von Beispiel 2 mit einem Index von 350 bei 234 °C und damit um 26 °C höher als der von Vergleichsbeispiel V1 mit einem Index von nur 200.

Der eigentliche Grund, weshalb gemäß dem Stand der Technik zur Herstellung von Formschäumen trotzdem PUR/PIR-Hartschaumstoffe mit Indizes von ca. 200 und nicht solche mit Indizes von ca. 350 eingesetzt werden, ist deren besseres Fließverhalten. Dieses ist über den Fließindex ermittelbar. Im Fall von Vergleichsbeispiel V1 mit einem Index von 200 betrug der Fließindex bei der Verschäumung im HSR unter Normaldruck 1.19, wohingegen der von Beispiel 2 mit 1.33 deutlich höher war. Durch das Anlegen eines geringen Unterdrucks von 40 mbar konnten die Fließeigenschaften ein beiden Fällen stark begünstigt werden. Es ist mittels dieser Methode sogar gelungen, das Fließverhalten des Schaums mit Index 350 so stark zu begünstigen, dass es mit einem Fließindex von 1.13 nahezu identisch mit dem aus dem Vergleichsbeispiel V1 von 1.11 ist.

### Beispielgruppe 2: Maschinelle Herstellung von PUR/PIR-Schaumstoffen

Für die Versuche wurde eine Hochdruckmaschine HK270E (Hennecke) mit einem MQ-18 Mischkopf (Hennecke) eingesetzt. Der Kreislaufdruck und der Verarbeitungsdruck am Mischkopf betrugen für beide Rohstoffe je 150 bar. Die Rohstofftemperatur am Mischkopf lag jeweils bei 28°C. Die Verarbeitung erfolgte mit einer Austragsmenge von 391 g/s und einer Drosselstellung von 14 mm. Als Form diente eine L-förmige, verschließbare Form mit einem Volumen von 36,25 L, die sowohl bei Normaldruck als auch mit angelegtem Unterdruck betrieben werden konnte. Bei allen Versuchen erfolgte sowohl die Entlüftung als auch das Anlegen des Unterdrucks über dasselbe Entlüftungsloch (oben rechts). Die Temperatur der L-Form betrug in jedem Fall 55 °C. Bei jedem Versuch wurde dieselbe Menge (1800 g) an Reaktionsgemisch in die Form eingebracht, sodass eine Aussage über die Fließeigenschaften des Schaumes in Abhängigkeit des vorherrschenden Gegendrucks über den erzielten Füllungsgrad der Form durch den Schaum möglich war.

### a) Verarbeitung ohne Unterdruck in der L-Form

Das PUR/PIR-Reaktionsgemisch schäumte gegen den vorherrschenden Luftdruck auf. Die Entlüftung der Form erfolgte oben rechts. Nach zehn Minuten wurde die Form geöffnet und der Füllungsgrad der Form durch den PUR/PIR-Hartschaumstoff beurteilt.

### b) Verarbeitung mit Unterdruck in der L-Form

Das PUR/PIR-Reaktionsgemisch schäumte zuerst gegen den vorherrschenden Luftdruck auf. Zu einem definierten Zeitpunkt (15 s, 30 s und 45 s) nach Beginn des Eintrags (0 s) wurde ein Unterdruck (0.1 bar, 0.2 bar) für eine definierte Zeitspanne (45 s, 30 s und 15 s) angelegt. Die Entlüftung der Form erfolgte oben rechts. Nach zehn Minuten wurde die Form geöffnet und der Füllungsgrad der Form durch den PUR/PIR-Hartschaumstoff beurteilt.

Die angegebenen Rohdichten wurden an einem 1000 cm³-Würfel (10 x 10 x 10 cm) durch Bestimmung der entsprechenden Masse ermittelt. Weitere Testverfahren waren die Torsionsprüfung zur Ermittlung des Erweichungspunkts (DIN EN ISO 6721-2) und die Brandprüfung (DIN EN ISO 11925-2).

Mit der Rezeptur aus Beispiel 2 wurden Versuche zur Formverschäumung mit und ohne Unterdruck auf der Maschine durchgeführt. Die Ergebnisse sind in der nachfolgenden Tabelle 2 zusammengefasst.

**Tabelle 2 Ergebnisse der Maschinenversuche^{a} mit Beispielrezeptur 2 (Index 350).**

| **Beispiel 2** | | **a (Vgl.)** | **b** | **c** | **d** | **e** |
|---|---|---|---|---|---|---|
| Liegezeit, tL | S | 10 | 10 | 10 | 10 | 10 |
| Abbindezeit, tA | S | 55 | 55 | 55 | 55 | 55 |
| Formfüllzeit, tF | S | 62 | 62 | 62 | 62 | 62 |
| freie Rohdichte | kg/m³ | 40,2 | 40,2 | 40,2 | 40,2 | 40,2 |
| Austragsmenge | G | 1800 | 1800 | 1800 | 1800 | 1800 |
| Unterdruck (relativ) | Bar | 0 | 0,1 | 0,1 | 0,1 | 0,2 |
| Zeitspanne mit Unterdruck (von - bis) | S | - | 15-60 | 30-60 | 45-60 | 45 - 60 |
| Dauer des angelegten Unterdrucks | S | 0 | 45 | 30 | 15 | 15 |
| gefülltes Volumen | % | 88,5 | 93,0 | 94,0 | 95,0 | 99,5 |

| | | | | | | |
|---|---|---|---|---|---|---|
| *^{a}*Hennecke HK270, MQ-18 Mischkopf, Austragsmenge 391 g/s, Rohstofftemperatur am Mischkopf 28°C. | | | | | | |

Die Angabe des relativen Unterdrucks ist so zu verstehen, dass beispielsweise ein relativer Unterdruck von 0,1 bar einem Druck entspricht, welcher um 0,1 bar niedriger als der Umgebungsdruck (Atmosphärendruck) ist.

Im Fall von Beispiel 2a wurde dieselbe Menge des Reaktionsgemisches in die Form eingebracht, die Verschäumung wurde jedoch ohne Unterdruck durchgeführt. Wie zu erwarten war die Form nur zu 88,5 % ausgefüllt. Dies ist auf die schlechten Fließeigenschaften dieser Rezeptur aus Beispiel 2 mit einem Index von 350 zurückzuführen. Es folgten dann Versuche mit einem Unterduck von 0.1 bar in den Beispielen 2b, 2c und 2d, der jeweils zu verschiedenen Zeitpunkten (nach 15 s, 30 s, und nach 45 s) während des Schäumvorgangs angelegt wurde. Jeweils kurz vor der Formfüllzeit (nach 60 s) wurde die Form spontan belüftet.

Somit schäumten die Beispiele 2b, 2c und 2d für 45 s, 30 s bzw. 15 s gegen einen im Vergleich zu Beispiel 2a um 0.1 bar reduzierten Gegendruck. Aus der Tabelle 2 wird deutlich, dass die Wahl des richtigen Zeitpunktes zum Anlegen des Unterdruckes maßgeblich für das erfolgreiche Ausschäumen der Form ist. So konnte mit Beispiel 2d das größte Volumen der Form bei einem Unterdruck von nur 0.1 bar ausgeschäumt werden. Eine Senkung des Gegendrucks um weitere 0.1 bar von 45 s bis 60 s führte im Fall von Beispiel 2e zum 99.5%igen Füllen der Form. In Beispiel 2e wurden somit die optimalen Verfahrensbedingungen gefunden, mit denen ein und dieselbe Form erfolgreich mit der bei Normaldruck schlecht fließenden Formulierung aus Beispiel 2 vollständig gefüllt werden konnte.

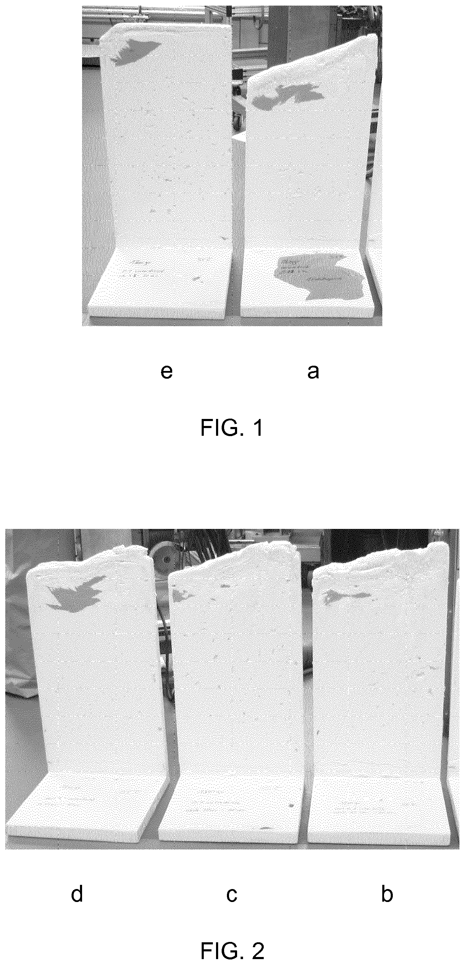

Fotographien der Schäume 2e und 2a (Vergleich) sind in FIG. 1 gezeigt. Fotographien der Schäume 2d, 2c und 2b sind in FIG. 2 gezeigt.

Überraschend hierbei ist, dass der Zeitpunkt, zu dem der Gegendruck gesenkt wird, sehr gut gewählt werden muss. In diesem Falle liegt dieser Zeitpunkt deutlich hinter der Liegezeit tL. Das optimale Zeitfenster beginnt hier kurz vor der Abbindezeit tA und endet kurz vor der Formfüllzeit tF. Des Weiteren wurde überraschenderweise gefunden, dass eine kurze Dauer (s. Tabelle 2), während der Unterdruck angelegt wird, viel effektiver ist als eine deutlich längere Zeitspanne.

Die vorliegende Erfindung beschreibt daher ein technisches Verfahren, mittels dem sich auch PUR/PIR-Hartschaumrezepturen mit schlechten Fließeigenschaften in Formverschäumungen erfolgreich verarbeiten lassen. Hierfür bedarf es keiner Anpassungen der eigentlichen chemischen Zusammensetzung. Die technische Verarbeitung erfordert einzig das Anlegen eines definierten Unterdrucks zum richtigen Zeitpunkt. Mittels dieser Methode erschließen sich die aufgrund ihrer besseren mechanischen Eigenschaften und ihres besseren Brandverhaltens zu bevorzugenden PUR/PIR-Rezepturen mit hohen Kennzahlen erstmals für die diskontinuierliche Herstellung von Formschäumen.

## Patentansprüche

1. Verfahren zur Herstellung eines PUR/PIR-Schaumkörpers, umfassend die Schritte:
- Bereitstellen einer Form, welche zum Anlegen eines Unterdrucks an das Innere der Form eingerichtet ist;
- Einfüllen einer Reaktionsmischung umfassend eine Isocyanat-reaktive Zusammensetzung **A** und ein Isocyanat **B** in die Form;
- Anlegen eines Unterdrucks an das Innere der Form, so dass der Unterdruck auf die eingefüllte Reaktionsmischung einwirkt;
wobei im Verfahren folgende aufeinanderfolgende Zeitpunkte definiert werden:
t0: Beginn des Einfüllens der Reaktionsmischung in die Form
tL: Beginn des Aufschäumens der Reaktionsmischung in der Form
tA: Beginn des Abbindens der Reaktionsmischung in der Form
tF: Abschluss des Füllens der Form durch die aufgeschäumte Reaktionsmischung
wobei vor dem Anlegen des Unterdrucks abgewartet wird, bis das Reaktionsgemisch eine gewisse Viskosität aufweist, so dass Treibmittelblasen nicht aus der Reaktionsmischung durch den Unterdruck herausgerissen werden,
der Unterduck spätestens nach tA an das Innere der Form angelegt wird und dass die Kennzahl der Reaktionsmischung ≥ 300 beträgt, wobei die Kennzahl der Reaktionsmischung als das molare Verhältnis von NCO-Gruppen zu NCO-reaktiven Gruppen, multipliziert mit 100, definiert ist.

2. Verfahren gemäß Anspruch 1, wobei der Unterdruck bereits vor tA angelegt wird und ≥ 50% bis ≤ 80% der Gesamtdauer des Anlegens des Unterdrucks vor tA liegen.

3. Verfahren gemäß Anspruch 1 oder 2, wobei das Anlegen des Unterdrucks vor tF beendet wird.

4. Verfahren gemäß einem oder mehreren der Ansprüche 1 oder 2, wobei das Anlegen des Unterdrucks zum Zeitpunkt von tF oder nach tF beendet wird.

5. Verfahren gemäß einem oder mehreren der Ansprüche 1 bis 4, wobei die Kennzahl der Reaktionsmischung ≥ 300 bis ≤ 500 beträgt.

6. Verfahren gemäß einem oder mehreren der Ansprüche 1 bis 5, wobei der Unterdruck für eine Gesamtdauer von ≥ 5 Sekunden bis ≤ 180 Sekunden angelegt wird.

7. Verfahren gemäß einem oder mehreren der Ansprüche 1 bis 6, wobei der Unterdruck ≥ 0.01 bar bis ≤ 0.95 bar beträgt.

8. Verfahren gemäß einem oder mehreren der Ansprüche 1 bis 7, wobei die Höhe des angelegten Unterdrucks zeitlich veränderlich ist.

9. Verfahren einem oder mehreren der Ansprüche 1 bis 8, wobei das Einfüllen der Reaktionsmischung in die Form derart durchgeführt wird, dass die Reaktionsmischung mindestens einen in der Form befindlichen und von der Form verschiedenen Gegenstand kontaktiert.

10. Verfahren gemäß Anspruch 9, wobei der Gegenstand ein Hohlkörper ist und die Reaktionsmischung im Inneren des Hohlkörpers vorliegt.

11. Verfahren gemäß Anspruch 9 oder 10, wobei die Reaktionsmischung zwischen zwei Deckschichten vorliegt.

12. Verfahren gemäß einem oder mehreren der Ansprüche 9 bis 11, wobei die Reaktionsmischung auf der Außenseite einer Rohrleitung vorliegt.

13. Verfahren gemäß einem oder mehreren der Ansprüche 1 bis 12, wobei der Fließindex der Reaktionsmischung nach dem Anlegen des Unterdrucks ≥ 1.0 bis ≤ 1.3 beträgt.

## Claims

1. Method for producing a PUR/PIR foam body, comprising the steps of:
- providing a mold adapted for applying an underpressure to the interior of the mold;
- introducing a reaction mixture comprising an isocyanate-reactive component **A** and an isocyanate **B** into the mold;
- applying an underpressure to the interior of the mold, so the underpressure acts on the introduced reaction mixture;
wherein the following consecutive moments are defined in the method:
t0: the reaction mixture has started to be introduced into the mold
tL: the reaction mixture has started to expand in the mold
tA: the reaction mixture has started to set in the mold
tF: the expanded reaction mixture has finished filling the mold
application of the underpressure is delayed until the reaction mixture has a certain viscosity, so that the underpressure does not cause blowing agent bubbles to be ripped out of the reaction mixture,
the underpressure is applied to the interior of the mold no later than tA, and in that
the isocyanate index of the reaction mixture is ≥ 300, wherein the isocyanate index of the reaction mixture is defined as the molar ratio of NCO groups of NCO-reactive groups, multiplied by 100.

2. Method according to Claim 1 wherein the underpressure is applied before tA and ≥ 50% to ≤ 80% of the total period for which the underpressure is applied is before tA.

3. Method according to Claim 1 or 2 wherein applying the underpressure is terminated before tF.

4. Method according to one or more of Claims 1 or 2 wherein applying the underpressure is terminated at tF or after tF.

5. Method according to one or more of Claims 1 to 4 wherein the isocyanate index of the reaction mixture is ≥ 300 to ≤ 500.

6. Method according to one or more of Claims 1 to 5 wherein the underpressure is applied for a total period of ≥ 5 seconds to ≤ 180 seconds.

7. Method according to one or more of Claims 1 to 6 wherein the underpressure is ≥ 0.01 bar to ≤ 0.95 bar.

8. Method according to one or more of Claims 1 to 7 wherein the magnitude of the applied underpressure is temporally variable.

9. Method one or more of Claims 1 to 8 wherein the introducing of the reaction mixture into the mold is effected such that the reaction mixture comes into contact with at least one article that is present in the mold and differs from the mold.

10. Method according to Claim 9 wherein the article is a hollow body and the reaction mixture is in the interior of the hollow body.

11. Method according to Claim 9 or 10 wherein the reaction mixture is between two face layers.

12. Method according to one or more of Claims 9 to 11 wherein the reaction mixture is on the outside surface of a pipe.

13. Method according to one or more of Claims 1 to 12 wherein the flow index of the reaction mixture after application of the underpressure is ≥ 1.0 to ≤ 1.3.

## Revendications

1. Procédé de fabrication d'un corps moussé de PUR/PIR, comprenant les étapes suivantes :
- la mise à disposition d'un moule, qui est conçu pour l'application d'une sous-pression à l'intérieur du moule ;
- le remplissage du moule avec un mélange réactionnel comprenant une composition réactive avec les isocyanates **A** et un isocyanate **B** ;
- l'application d'une sous-pression à l'intérieur du moule, de telle sorte que la sous-pression agisse sur le mélange réactionnel rempli ;
les moments successifs suivants étant définis dans le procédé :
t0 : le début du remplissage du moule avec le mélange réactionnel,
tL : le début du moussage du mélange réactionnel dans le moule,
tA : le début de la prise du mélange réactionnel dans le moule,
tF : l'achèvement du remplissage du moule avec le mélange réactionnel moussé,
la présentation par le mélange réactionnel d'une certaine viscosité étant attendue avant l'application de la sous-pression, de telle sorte que des bulles d'agent gonflant ne soient pas extraites du mélange réactionnel par la sous-pression,
la sous-pression étant appliquée à l'intérieur du moule au plus tard après tA, et en ce que
l'indice caractéristique du mélange réactionnel étant ≥ 300, l'indice caractéristique du mélange réactionnel étant défini comme le rapport molaire entre les groupes NCO et les groupes réactifs avec NCO, multiplié par 100.

2. Procédé selon la revendication 1, dans lequel la sous-pression est déjà appliquée avant tA, et ≥ 50 % à ≤ 80 % de la durée totale de l'application de la sous-pression se situe avant tA.

3. Procédé selon la revendication 1 ou 2, dans lequel l'application de la sous-pression est achevée avant tF.

4. Procédé selon une ou plusieurs des revendications 1 ou 2, dans lequel l'application de la sous-pression est achevée au moment de tF ou après tF.

5. Procédé selon une ou plusieurs des revendications 1 à 4, dans lequel l'indice caractéristique du mélange réactionnel est de ≥ 300 à ≤ 500.

6. Procédé selon une ou plusieurs des revendications 1 à 5, dans lequel la sous-pression est appliquée pendant une durée totale de 5 secondes à ≤ 180 secondes.

7. Procédé selon une ou plusieurs des revendications 1 à 6, dans lequel la sous-pression est 0,01 bar à ≤ 0,95 bar.

8. Procédé selon une ou plusieurs des revendications 1 à 7, dans lequel l'importance de la sous-pression appliquée est variable dans le temps.

9. Procédé une ou plusieurs des revendications 1 à 8, dans lequel le remplissage du moule avec le mélange réactionnel est réalisé de telle sorte que le mélange réactionnel rentre en contact avec au moins un objet se trouvant dans le moule et différent du moule.

10. Procédé selon la revendication 9, dans lequel l'objet est un corps creux et le mélange réactionnel se trouve à l'intérieur du corps creux.

11. Procédé selon la revendication 9 ou 10, dans lequel le mélange réactionnel se trouve entre deux couches de recouvrement.

12. Procédé selon une ou plusieurs des revendications 9 à 11, dans lequel le mélange réactionnel se trouve sur le côté extérieur d'une canalisation.

13. Procédé selon une ou plusieurs des revendications 1 à 12, dans lequel l'indice de fluidité du mélange réactionnel après l'application de la sous-pression est de ≥ 1,0 à ≤ 1,3.
